(19) Europäisches Patentamt
European Patent Office
Office européen des brevets

(11) Veröffentlichungsnummer: **0 030 017 B1**

(12) # EUROPÄISCHE PATENTSCHRIFT

(45) Veröffentlichungstag der Patentschrift: **15.09.82**

(51) Int. Cl.³: **C 02 F 1/52**

(21) Anmeldenummer: **80107431.1**

(22) Anmeldetag: **27.11.80**

(54) **Flüssiges, wässriges anorganisches Flockungsmittel.**

(30) Priorität: **28.11.79 DE 2947932**

(43) Veröffentlichungstag der Anmeldung: **10.06.81 Patentblatt 81/23**

(45) Bekanntmachung des Hinweises auf die Patenterteilung: **15.09.82 Patentblatt 82/37**

(84) Benannte Vertragsstaaten: **AT BE CH DE FR GB IT LI NL**

(56) Entgegenhaltungen:
**AT-B-324 967**
**DE-A-1 907 359**
**DE-A-2 229 895**
**DE-A-2 658 776**
**DE-C-971 180**
**FR-A-1 358 224**
**FR-A-2 187 701**
**FR-A-2 334 632**
**GB-A-618 895**
**GB-A-1 484 671**
**US-A-3 929 666**

(73) Patentinhaber: **Feldmann-Chemie KG Inh. Hagen Feldmann, Industriestrasse 3, D-8034 Germering b. München (DE)**

(72) Erfinder: **Walzer, Michael, Schweighofstrasse 14c, D-8910 Landsberg/Lech (DE)**

(74) Vertreter: **Flügel, Otto, Dipl.-Ing. et al, Lesser, Flügel & Säger Patentanwälte Cosimastrasse 81, D-8000 München 81 (DE)**

**GWF DAS GAS- UND WASSERFACH, 118. Jahrgang, 1977, Ausgabe WASSER/ABWASSER, R. Oldenbourg Verlag GmbH, München, H. 1, B. SPEI, »Das Norwich-Verfahren«, Seiten 29 bis 32**

EP 0 030 017 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

BUNDESDRUCKEREI BERLIN

# Flüssiges, wäßriges anorganisches Flockungsmittel

Die Erfindung betrifft ein flüssiges wäßriges anorganisches Flockungsmittel für die Wasseraufbereitung, auf Aluminiumchloridbasis.

Bekanntlich verwendet man zur Wasseraufbereitung Flockungsmittel, beispielsweise Eisenchlorid und Aluminiumsulfat, die mit der Carbonathärte im Wasser schwerlösliche, spezifisch schwere Metallhydroxide bilden. Die Oxidhydratflocken binden andere Verbindungen, die sich schlecht absetzen. Die Flocke kann dann durch Sedimentation und Filtration aus dem Wasser entfernt werden.

Bekannt ist die Verwendung von Aluminiumchlorid als Flockungsmittel bei der Schwimmbadwasseraufbereitung. Ein von der Anmelderin hergestelltes und vertriebenes flüssiges, wäßriges Flockungsmittel für die Aufbereitung von Schwimmbadwasser und von Trinkwasser enthält als aktiven Bestandteil ein Aluminiumhydroxychlorid, das auch als Polyaluminiumchlorid der Formel:

$Al_n(OH)_mCl_{3n-m}$
(Basizität $m/3n \times 100 = 50$ bis 60)

bezeichnet wird. Der Gehalt an Aluminiumkomponente, ausgedrückt als $Al_2O_3$ beträgt etwa 17,4 g/l.

Nachteilig am bekannten Flockungsmittel ist, daß etwa 3 bis 5 Tage nach Verdünnung der Stammlösung ein Geliervorgang auftritt, der so ausgeprägt ist, daß das Flockungsmittel nicht mehr pumpfähig ist. Daher setzt die Anwendung des bekannten Mittels voraus, daß man zur Verdünnung allenfalls Weichwasser oder entsalztes Wasser einsetzt. Das bedeutet für die Praxis eine Erschwernis der Handhabung und auch eine Verteuerung.

Darüberhinaus sind auch Sulfat enthaltende Trocknungsmittel auf Aluminiumchlorid-Basis, vgl. US-A-3 929 666, sowie Aluminiumsilicat-Komplexe als Koaguliermittel bekannt, vgl. DE-A-2 229 895.

Ein gravierender Nachteil der bekannten Flockungsmittel ist dadurch gegeben, daß im Wasser vorhandene Aminosäuren nicht oder nur ungenügend ausgefällt werden.

Der Erfindung liegt die Aufgabe zugrunde, ein flüssiges, wäßriges Flockungsmittel, insbesondere für die Badewasseraufbereitung auf Aluminiumchloridbasis bereitzustellen, das frei von den vorgenannten Nachteilen ist, insbesondere nach dem Verdünnen nicht geliert, so daß es ohne weiteres gehandhabt werden kann und insbesondere pumpfähig ist.

Diese Aufgabe wird gelöst durch ein Mittel der eingangs genannten Art, das dadurch gekennzeichnet ist, daß es die folgenden Bestandteile in den folgenden Mengen enthält:

| | |
|---|---|
| Aluminiumkomponente, Gehalt als $Al_2O_3$ ausgedrückt: | 19 bis 38 g/l |
| Chlorid: | 39 bis 80 g/l |
| Silikatkomponente, Gehalt als $SiO_2$ ausgedrückt: | 8 bis 19 g/l |
| Sulfat: | 1,6 bis 3,5 g/l |

Nach einer bevorzugten Ausführungsform enthält das erfindungsgemäße Flockungsmittel die nachfolgenden Bestandteile in den folgenden Mengen:

| | |
|---|---|
| Aluminiumkomponente, Gehalt als $Al_2O_3$ ausgedrückt: | 23 bis 32 g/l |
| Chlorid: | 42 bis 67 g/l |
| Silikatkomponente, Gehalt als $SiO_2$ ausgedrückt: | 9,7 bis 16 g/l |
| Sulfat: | 1,9 bis 2,7 g/l |

Das erfindungsgemäße Mittel kann überdies kleine Mengen an Fe, Pb, Mn, As und Ammoniumstickstoff, sowie andere übliche Zusätze, enthalten.

Bei der Aluminiumkomponente des erfindungsgemäßen Mittels handelt es sich um ein basisches Aluminiumchlorid bzw. ein kationisches Aluminiumsalz, beispielsweise um das eingangs genannte Polyaluminiumchlorid.

Die zuvor genannten kleinen Mengen an Fe, Pb, Mn, As, Ammoniumstickstoff können sich beispielsweise in den folgenden Bereichen bewegen:

| | |
|---|---|
| Fe: | 5,7 bis 10,9 mg/l |
| Pb: | 0,1 bis 0,4 mg/l |
| Mn: | 0,01 bis 0,05 mg/l |
| As (ausgedrückt als As): | 0,005 bis 0,03 mg/l |
| Ammoniumstickstoff (ausgedrückt als N): | 0,1 bis 0,8 mg/l |

Das erfindungsgemäße Flockungsmittel ist normalerweise frei von Polyphosphaten oder Phosphaten, frei von Fluorid und von nennenswerten Mengen organischer Substanzen. Die Dichte des wäßrigen Flockungsmittels kann im Bereich von beispielsweise 1,04 bis 1,15 liegen. Sie kann jedoch auch außerhalb dieser Bereiche liegen, insbesondere wenn höhere konzentrierte oder verdünntere Mischungen vorliegen.

Die Basekapazität bis pH 8,2 (ausgedrückt in Val/l) kann im Bereich von beispielsweise 0,3 bis 0,5 liegen.

Das erfindungsgemäße Flockungsmittel besitzt als solches und in Verdünnung eine ausgezeichnete Stabilität, die das eingangs

genannte bekannte Mittel in Verdünnung nicht besitzt. Dieser Effekt ist überraschend und läßt sich nicht ohne weiteres erklären. Man könnte allenfalls vermuten, daß das Flockungsmittel eine »maskierende« Wirkung besitzt, die möglicherweise auf den Gehalt an Silikat zurückgeführt werden kann. Diese Vermutung wurde jedoch bislang nicht bestätigt.

Es wurde darüber hinaus nachweisbar festgestellt, daß das erfindungsgemäße Flockungsmittel überraschenderweise Aminosäuren mit aus dem Wasser ausfällt, so daß sich eine ausgezeichnete Eignung des erfindungsgemäßen Flockungsmittels insbesondere bei Verwendung im Bereich der Schwimmbad-Wasseraufbereitung ergibt.

Das nachfolgende Beispiel dient zur weiteren Erläuterung der Erfindung.

### Beispiel

Das nachstehende Flockungsmittel in Form einer »Stammlösung« besitzt auch nach Verdünnung eine ausgezeichnete Stabilität, d. h. es erfolgt keine nennenswerte hydrolytische Spaltung:

Flüssigkeit, bisweilen leicht gelb und opaleszierend.

| | |
|---|---|
| Bestandteile: | |
| Chlorid | |
| ($Cl^-$, g/l) | 64,3 |
| (g/kg) | |
| (Val/l) | 1,81 |
| Aluminium | |
| ($Al_2O_3$, g/l) | 31,0 |
| (g/kg) | 28,4 |
| (Val/l) | 1,82 |
| Basekapazität bis pH 8,2 | |
| (Val/l) | 0,486 |
| (Val/kg) | 0,445 |
| Silikat | |
| ($SiO_2$, g/l) | 13,6 |
| (g/kg) | 12,5 |
| (Val/kg) | 0,226 |
| Sulfat | |
| ($SO_4^{2-}$, g/l) | 2,73 |
| (g/kg) | 2,50 |
| Eisen | |
| (Fe, mg/l) | 9,6 |
| (mg/kg) | 8,8 |
| Blei | |
| (Pb, mg/l) | 0,3 |
| (mg/kg) | 0,3 |
| Mangan | |
| (Mn, mg/l) | 0,035 |
| (mg/kg) | 0,032 |
| Arsen | |
| (As, mg/l) | 0,012 |
| (mg/kg) | 0,011 |
| Ammoniumstickstoff | |
| (N, mg/l) | 0,6 |
| (mg/kg) | 0,5 |
| Dichte | 1,092 |

Das vorstehende Flockungsmittel liefert bei Verwendung zur Filterkonditionierung von Badewasser, Brauch- und Trinkwasser und zur Flockung von Oberflächenwasser ausgezeichnete Ergebnisse.

## Patentansprüche

1. Flüssiges, wäßriges anorganisches, Sulfat enthaltendes Flockungsmittel für die Wasseraufbereitung, auf Aluminiumchloridbasis, dadurch gekennzeichnet, daß es die folgenden Bestandteile in den folgenden Mengen enthält:

| | |
|---|---|
| Aluminiumkomponente, Gehalt als $Al_2O_3$ ausgedrückt: | 19 bis 38 g/l |
| Chlorid: | 39 bis 80 g/l |
| Silikatkomponente, Gehalt als $SiO_2$ ausgedrückt: | 8 bis 19 g/l |
| Sulfat: | 1,6 bis 3,5 g/l |

2. Flockungsmittel nach Anspruch 1, dadurch gekennzeichnet, daß es die folgenden Bestandteile in den folgenden Mengen enthält:

| | |
|---|---|
| Aluminiumkomponente, Gehalt als $Al_2O_3$ ausgedrückt: | 23 bis 32 g/l |
| Chlorid: | 42 bis 67 g/l |
| Silikatkomponente, Gehalt als $SiO_2$ ausgedrückt: | 9,7 bis 16 g/l |
| Sulfat: | 1,9 bis 2,7 g/l |

3. Flockungsmittel nach Anspruch 1 oder 2, dadurch gekennzeichnet, daß es kleine Mengen an Fe, Pb, Mn, As und Ammoniumstickstoff enthält.

## Claims

1. Liquid aqueous inorganic sulphate-bearing flocculating agent for water purification, based on aluminium chloride, characterized in that it includes the following constituents, in the following amounts:

| | |
|---|---|
| aluminium component, content expressed as $Al_2O_3$: | 19 to 38 g/l |
| chloride: | 39 to 80 g/l |
| silicate component, content expressed as $SiO_2$: | 8 to 19 g/l |
| sulphate: | 1.6 to 3.5 g/l |

2. A flocculating agent according to claim 1 characterized in that it includes the following constituents, in the following amounts:

| | |
|---|---|
| aluminium component, | |
| content expressed as $Al_2O_3$: | 23 to 32 g/l |
| chloride: | 42 to 67 g/l |
| silicate component, | |
| content expressed as $SiO_2$: | 9.7 to 16 g/l |
| sulphate: | 1.9 to 2.7 g/l |

3. A flocculating agent according to claim 1 or claim 2 characterized in that it includes small amounts of Fe, Pb, Mn, Sa and ammonium nitride.

**Revendications**

1. Agent floculant minéral liquide, aqueux, contenant du sulfate, destiné au traitement de l'eau et à base de chlorure d'aluminium, caractérisé en ce qu'il contient les constituants suivants dans les quantités suivantes:

| | |
|---|---|
| Constituant aluminium, | |
| – teneur exprimée en $Al_2O_3$: | 19 à 38 g/l |
| – chlorure: | 39 à 80 g/l |
| Constituant silicate, | |
| – teneur exprimée en $SiO_2$: | 8 à 19 g/l |
| – sulfate: | 1,6 à 3,5 g/l |

2. Agent floculant suivant la revendication 1, caractérisé en ce qu'il contient les constituants suivants dans les quantités suivantes:

| | |
|---|---|
| Constituant aluminium, | |
| – teneur exprimée en $Al_2O_3$: | 23 à 32 g/l |
| – chlorure: | 42 à 67 g/l |
| Constituant silicate, | |
| – teneur exprimée en $SiO_2$: | 9,7 à 16 g/l |
| – sulfate: | 1,9 à 2,7 g/l |

3. Agent floculant suivant l'une quelconque des revendications 1 ou 2, caractérisé en ce qu'il contient de faibles quantités de fer, plomb, manganèse, arsenic et d'azote ammoniacal.